# EUROPEAN PATENT SPECIFICATION

(11) **EP 3 391 397 B1**
(45) Date of publication and mention of the grant of the patent: **17.06.2020**
(21) Application number: 16810396.8
(22) Date of filing: 15.12.2016
(51) Int. Cl.: H01F 38/30

(54) **CURRENT TRANSFORMER FOR HIGH VOLTAGE GAS INSULATED SWITCHGEAR SUBSTATION**
STROMWANDLER FÜR HOCHSPANNUNGSGASISOLIERTE SCHALTANLAGENUNTERSTATION
TRANSFORMATEUR DE COURANT POUR SOUS-STATION DE COMMUTATION HAUTE TENSION À ISOLATION GAZEUSE

(30) Priority: 18.12.2015 EP 15201222
(43) Date of publication of application: 24.10.2018
(73) Proprietor: ABB Schweiz AG, 5400 Baden (CH)
(72) Inventor: ODEHNAL, Martin, 644 00 Brno (CZ); BELEHRAD, Lukas, 625 00 Brno (CZ); MICHLICEK, Petr, 741 01 Novy Jicin (CZ); LIU, Andy-Hai, Fujian 361004 (CN); BRAUN, Thomas, 60437 Frankfurt (DE); HOLAUS, Walter, 8192 Glattfelden (CH)
(74) Representative: Maiwald Patent- und Rechtsanwaltsgesellschaft mbH
(86) International application number: PCT/EP2016/081255
(87) International publication number: WO 2017/102983

(56) References cited:
- EP-A2- 0 510 311
- CH-A- 514 923
- DE-A1- 2 242 958
- DE-A1- 2 524 547
- DE-U- 1 983 585
- DE-U1- 8 904 684
- FR-A1- 2 230 052
- US-A- 3 643 003

## Description

The invention relates to a current transformer arrangement for high voltage gas insulated switchgear substation, wherein the current transformer is arranged in an enclosure of housing, according to the preamble of claim 1.

Known current transformer for high voltage gas insulated switchgear substation are located outside or the SF6 (sulfurhexafluoride) gas insulation area of high voltage switchgear substations.

Standard known current transformer enclosed by metal sheet as protection has lower IP protection and environment protection due to mechanical component sealed by silicone. More components are used and more space is necessary, which can be used for active parts. The transformer body has to be screwed to the GIS flanges to fix current transformers on GIS components that lead to shorter assembly time, lower cost and better manipulation. In DE 2524547 A1, CH514923 A, and DE 2242958A1 current transformers with the features of the preamble of claim 1 are disclosed. Secondary elements of the current transformer like clamps are not separately accessable from external. This is a great disadvantage.

So the object of the invention is, to enhance the protection of current transformers in high voltage gas insulated switchgears.

The invention is, that the current transformer is embedded by vacuum casting resin outside of a metal tube, in such, that a primary conductor of the current transformer is located in the middle of a metal assembly and sealed by insulation gas, and that on the metal tube are fixed coils by polyurethane and centered, and that further a secondary box is casted sidely on the casted resin of the metal tube, in order to contain secondary side elements of the current transformer as claimed in claim 1.

In a further advantageous embodiment, the metal tube is made of aluminum.

In a further advantageous embodiment, the insulation gas is SF6.

In a further important embodiment, the complete arrangement is covered by epoxy or plastic resin, including the current transformer or transformers and the coils of the current transformer or transformers.

The secondary box is integral part of the aforesaid resin.

In the secondary box are integrated secondary clamps and/or bushing supports and/or earthing clamp for the current transformer or transformers.

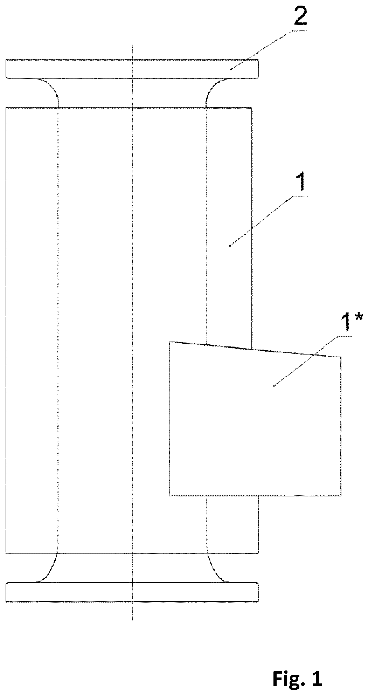

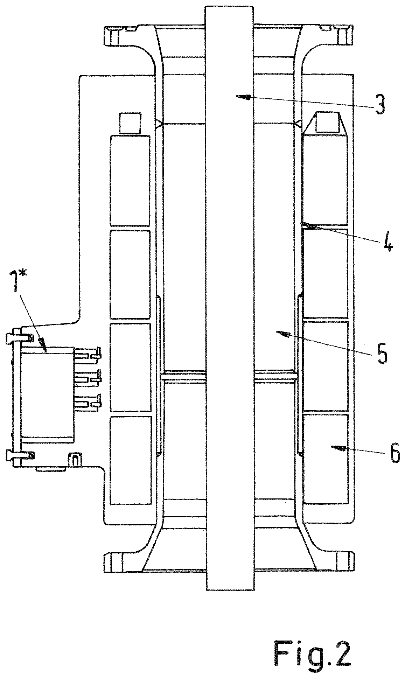

An embodiment of the invention is shown in the figures 1 and 2.

A current transformer is formed by vacuum casting of epoxy resin 1 outside of an metal tube made of two aluminum tubes 2 which are connected by pressing and with the use of an insulation tube. The primary conductor of the current transformer is located in the middle of the aforesaid aluminum assembly and is sealed by SF6 gas. On the aluminum tubes 2 are fixed coils by polyurethane which are arranged there in a centered way. This allows to cast epoxy resin from all sides and create the secondary box 1*, which is then also made by epoxy. In the secondary box are arranged the secondary parts of the current transformer. The epoxy resin is creating the final design, increasing protection of SF6 leakage and generally is protecting coils and secondary side against to the environment.

Figure 2 shows the current transformer more detailed.

The primary conductor 3 is located inside the aforesaid aluminum tube 2. The aluminum tube 2 includes an aluminum flange 4. The intermediate space between the primary conductor 3 and the aluminum tube 2, and aluminum flange 4 respectively, is filled with an insulating gas, for example SF6 (sulfurhexafluoride).

On the aluminum tube are positioned the secondary coils 6.

Like it can be seen, the secondary box 1* is integral part of the resin 1.

In this box are located secondary clamps and/or bushing supports and/or earthing clamp for the current transformer or transformers.

This construction results in several advantages.

The resin body 1, made of epoxy or plastic resin, including all aforesaid components, results in an effective protection of all mechanical and electrical parts, including the coils. Further more is result in a sure fixation and positioning of all components.

Furthermore, this construction can be produced in an automatic fabrication, with high performance in quality.

### List of reference signs

- 1: Epoxy resin
- 1*: Secondary box
- 2: Aluminum tube
- 3: Primary conductor
- 4: Aluminum flange
- 5: SF6-Gas-Space
- 6: Secondary coil
10 Current transfomer

## Claims

1. Current transformer arrangement for high voltage gas insulated switchgear substation, wherein the current transformer is arranged in an enclosure of housing, **characterized in**
**that** the current transformer is embedded by vacuum casting resin (1) outside of a metal tube (2) of a metal assembly, in such, that a primary conductor (3) of the current transformer is located in the middle of the metal assembly and sealed by insulation gas (5), and that on the metal tube (2) are fixed secondary coils (6) by polyurethane and centered, and that a secondary box (1*) is casted sidely on the casted resin (1) of the metal tube, in order to contain secondary side elements of the current transformer, which are secondary clamps, and/or bushing supports, and/or earthing clamps, and that the sidely arranged secondary box is casted integrally in the same resin (1) as the current transformer.

2. Current transformer arrangement for high voltage gas insulated switchgear substation, wherein the current transformer is arranged in an enclosure of housing, as claimed in claim 1, **characterized in**
**that** the metal tube (2) is made of aluminum.

3. Current transformer arrangement for high voltage gas insulated switchgear substation, wherein the current transformer is arranged in an enclosure of housing, as claimed in claim 1 or 2, **characterized in**
**that** the insulation gas is SF6.

4. Current transformer arrangement according to one of the aforesaid claims, **characterized in**
**that** the complete arrangement is covered by epoxy or plastic resin, including the current transformer or transformers and the coils of the current transformer or transformers.

## Patentansprüche

1. Stromtransformatoranordnung für eine gasisolierte Hochspannungsschaltanlagensubstation, wobei der Stromtransformator in einer Umhüllung eines Gehäuses angeordnet ist,
**dadurch gekennzeichnet,**
**dass** der Stromtransformator durch ein vakuumgegossenes Harz (1) außerhalb eines Metallrohrs (2) einer Metallbaugruppe eingebettet ist, so dass sich ein Primärleiter (3) des Stromtransformators in der Mitte der Metallbaugruppe befindet und durch ein Isolationsgas (5) versiegelt ist, und dass auf dem Metallrohr (2) Sekundärspulen (6) durch Polyurethan fixiert und zentriert sind, und dass ein Sekundärkasten (1*) seitlich an dem gegossenen Harz (1) des Metallrohrs gegossen ist, um Sekundärseitenelemente des Stromtransformators zu enthalten, die Sekundärklemmen und/oder Durchführungshalterungen und/oder Erdungsklemmen sind, und dass der seitlich angeordnete Sekundärkasten integral in demselben Harz (1) wie der Stromtransformator gegossen ist.

2. Stromtransformatoranordnung für eine gasisolierte Hochspannungsschaltanlagensubstation, wobei der Stromtransformator in einer Umhüllung eines Gehäuses angeordnet ist, nach Anspruch 1,
**dadurch gekennzeichnet,**
**dass** das Metallrohr (2) aus Aluminium gefertigt ist.

3. Stromtransformatoranordnung für eine gasisolierte Hochspannungsschaltanlagensubstation, wobei der Stromtransformator in einer Umhüllung eines Gehäuses angeordnet ist, nach Anspruch 1 oder 2,
**dadurch gekennzeichnet,**
**dass** das Isolationsgas SF6 ist.

4. Stromtransformatoranordnung nach einem der vorhergehenden Ansprüche,
**dadurch gekennzeichnet,**
**dass** die gesamte Anordnung durch ein Epoxid- oder Kunststoffharz bedeckt ist, einschließlich des Stromtransformators oder der Stromtransformatoren und der Spulen des Stromtransformators oder der Stromtransformatoren.

## Revendications

1. Agencement de transformateur de courant pour une sous-station de commutation à haute tension isolée par un gaz, le transformateur de courant étant agencé dans une enceinte de boîtier, **caractérisé en ce que** le transformateur de courant est incorporé en moulant sous vide une résine (1) à l'extérieur d'un tube métallique (2) d'un assemblage métallique, de sorte qu'un conducteur primaire (3) du transformateur de courant est localisé au milieu de l'assemblage métallique et scellé par un gaz d'isolation (5), et que sur le tube métallique (2) sont fixées des bobines secondaires (6) par un polyuréthane et centrées, et qu'une boîte secondaire (1*) est moulée de manière latérale sur la résine moulée (1) du tube métallique, afin de contenir des éléments latéraux secondaires du transformateur de courant, qui sont des fixations secondaires, et/ou des supports de bague, et/ou des fixations pour la mise à terre, et que la boîte secondaire agencée de manière latérale est moulée intégralement dans la même résine (1) que le transformateur de courant.

2. Agencement de transformateur de courant pour une sous-station de commutation à haute tension isolée par un gaz, le transformateur de courant étant agencé dans une enceinte de boîtier, selon la revendication 1, **caractérisé en ce que** le tube métallique (2) est composé d'aluminium.

3. Agencement de transformateur de courant pour une sous-station de commutation à haute tension isolée par un gaz, le transformateur de courant étant agencé dans une enceinte de boîtier, selon la revendication 1 ou 2, **caractérisé en ce que** le gaz d'isolation est SF6.

4. Agencement de transformateur de courant selon l'une des revendications précédentes, **caractérisé en ce que** l'agencement complet est recouvert par une résine époxy ou plastique, y compris le ou les transformateur (s) de courant et les bobines du ou des transformateur(s) de courant.
